(19) Europäisches Patentamt / European Patent Office / Office européen des brevets

(11) **EP 2 041 848 B1**

(12) **FASCICULE DE BREVET EUROPEEN**

(45) Date de publication et mention
de la délivrance du brevet:
**09.08.2017 Bulletin 2017/32**

(21) Numéro de dépôt: **07823513.2**

(22) Date de dépôt: **08.06.2007**

(51) Int Cl.:
***H01S 3/067*** *(2006.01)*

(86) Numéro de dépôt international:
**PCT/FR2007/051397**

(87) Numéro de publication internationale:
**WO 2008/006994 (17.01.2008 Gazette 2008/03)**

(54) **DISPOSITIF LASER À FIBRE OPTIQUE DE PUISSANCE**

GLASFASERSTROM-LASERGERÄT

FIBER OPTIC POWER LASER DEVICE

(84) Etats contractants désignés:
**DE GB IT**

(30) Priorité: **13.07.2006 FR 0652973**

(43) Date de publication de la demande:
**01.04.2009 Bulletin 2009/14**

(73) Titulaire: **EOLITE Systems**
**33600 Pessac (FR)**

(72) Inventeurs:
• **METIVIER, Philippe**
**F-33400 Talence (FR)**
• **SALIN, François**
**F-33170 Gradigan (FR)**

(74) Mandataire: **Jacobacci Coralis Harle**
**32, rue de l'Arcade**
**75008 Paris (FR)**

(56) Documents cités:
WO-A-2004/066458     JP-A- 2006 019 490
US-A- 5 818 630      US-A1- 2003 086 446

• **HONG-SEOK SEO ET AL: "Single mode laser oscillation in an Nd-doped large core double clad fiber cavity with concatenated adiabatic tapers" ETRI Journal Electron. & Telecommun. Res. Inst., Taejon South Korea, vol. 24, no. 3, 1 juin 2002 (2002-06-01), pages 255-258, XP002436408 ISSN: 1225-6463**
• **M. HOTOLEANU ET AL: "High order modes suppression in large mode area active fibers by controlling the radial distribution of the rare earth doping" 26 janvier 2006 (2006-01-26), XP002436409 spie photonic west 2006 LASE symposium Extrait de l'Internet: URL:http://www.liekki.fi/docs/events/PW200 6_Liekki_LAD_Paper6102_64.pdf>**
• **MAFI A ET AL: "A LARGE-CORE COMPACT HIGH-POWER SINGLE-MODE PHOTONIC CRYSTAL FIBER LASER" IEEE PHOTONICS TECHNOLOGY LETTERS, IEEE SERVICE CENTER, PISCATAWAY, NJ, US, vol. 16, no. 12, décembre 2004 (2004-12), pages 2595-2597, XP001212346 ISSN: 1041-1135**

**Description**

L'invention concerne un dispositif laser à fibre optique de puissance permettant d'obtenir un rayonnement spatialement monomode à partir d'une fibre optique multimode.

On entend par rayonnement monomode, un rayonnement dont la divergence est proche du minimum imposé par la diffraction du profil en intensité dudit rayonnement.

Les lasers à solide sont composés d'au moins un milieu amplificateur et d'un résonateur optique formé par un ensemble de miroirs. Les propriétés spatiales du faisceau de sortie sont données par les caractéristiques de ce résonateur.

On peut en particulier montrer que si le résonateur est dit stable, la forme du faisceau peut se décomposer sur une base de fonctions de Hermite Gauss. Ces fonctions sont appelées les modes de la cavité.

Parmi ces modes, le mode fondamental a une forme gaussienne et possède la plus petite divergence. Il est souvent privilégié par l'utilisateur puisqu'il permet la focalisation la plus petite. Néanmoins, la zone excitée dans le milieu amplificateur possède une dimension propre qui ne dépend que de la façon dont l'énergie a été répartie dans le milieu et aucunement du résonateur.

Lorsque cette zone excitée est plus large que le diamètre du mode fondamental à cet endroit de la cavité, une partie de l'énergie est couplée sur des modes d'ordre supérieur et le faisceau produit devient multimode. Les modes d'ordre élevé présentent une divergence plus grande et se focalisent donc sur une zone de plus grand diamètre. On peut aussi expliquer ce phénomène en considérant que tout mode voit un certain gain dans le milieu amplificateur et subit des pertes par propagation.

Seuls les modes dont le gain dépasse les pertes peuvent produire un effet laser. Le gain d'un mode dépend du recouvrement de ce mode et de la zone excitée dans le milieu amplificateur.

Au total, afin de rendre le laser spatialement monomode, il convient de concevoir le résonateur de façon à ce que les dimensions du mode fondamental et de la zone excitée coïncident le mieux possible.

Si ceci n'est pas possible, par exemple pour des questions de longueur du résonateur, on peut forcer le fonctionnement monomode du résonateur en introduisant une ouverture dont le diamètre est calculé afin de correspondre exactement à celui du mode fondamental à l'endroit de l'ouverture. Les pertes subies par les modes d'ordre élevé lors du passage dans le trou sont suffisamment importantes pour amener ces derniers en dessous du seuil de l'effet laser et ne permettre un effet laser que pour le mode fondamental.

Les lasers à fibre se distinguent des lasers à solide classiques par le fait que le milieu amplificateur possède une structure guidante qui impose certaines caractéristiques spatiales au faisceau le traversant.

Ainsi certaines fibres ne permettent le guidage que de faisceaux monomodes alors que d'autres supportent plusieurs modes. Lorsqu'une telle fibre est incluse dans un résonateur optique on obtient un laser à fibre dont les caractéristiques spatiales sont généralement imposées par la fibre. En particulier si la fibre est monomode, le laser ne peut être que monomode.

Ce cas particulier est très favorable mais ne peut pas toujours être mis en oeuvre. En particulier, le nombre de modes supportés par la fibre est fonction du diamètre du coeur de la fibre et de la différence d'indice entre le coeur et la gaine.

Afin de garder une propagation purement monomode lorsque le diamètre du coeur augmente, il faut diminuer le saut d'indice entre le coeur et la gaine. La technologie de fabrication des fibres ne permet pas d'obtenir actuellement des fibres monomodes dont le coeur présente un diamètre supérieur à environ 20 microns. Etant donné le seuil de dommage de la silice ou du verre qui compose le coeur de ces fibres, il n'est donc pas possible de dépasser certaines limites en puissance moyenne dans le cas des lasers continus ou puissance de crête pour les lasers pulsés.

Afin d'augmenter la puissance accessible il faut accepter de perdre en qualité spatiale et utiliser des fibres multimodes. Une solution a été trouvée à travers l'utilisation de fibres dites photoniques ou à couches photoniques ou MPF (« Multiclad Photonic Fiber ») pour lesquelles on peut moduler l'indice effectif en introduisant des capillaires remplis d'air dans la gaine.

De telles fibres sont décrites dans l'article de J. Limpert, N. Deguil-Robin, I. Manek-Hönninger, F. Salin, F. Röser, A. Liem, T. Schreiber, S. Nolte, H. Zellmer, A. Tünnermann, J. Broeng, A: Petersson, and C. Jakobsen, "High-power rod-type photonic crystal fiber laser," Opt. Express 13, 1055-1058 (2005). Les lasers MPF comportent des amplificateurs optiques à fibre en verre formée d'un coeur dopé et d'au moins une gaine périphérique qui assure le guidage d'onde produite. Le coeur est dopé par un ion de terre rare, Néodyme ou Ytterbium en général. Le guidage est assuré par la mise en oeuvre d'une structure photonique obtenue par un ensemble géométrique de canaux ou capillaires aériques (trous). Cette structure abaisse artificiellement l'indice rencontré par l'onde produite et permet des propagations monomodes. On peut ainsi obtenir des fibres monomodes de diamètre supérieur à 60 microns.

Néanmoins la fabrication de ces fibres est compliquée et repose sur une parfaite maîtrise et uniformité de l'indice du coeur. Ceci n'est pas compatible avec de forts dopages et il faut de nouveau accepter un compromis entre diamètre de coeur et uniformité de dopage.

En particulier, le coeur même de la fibre peut être micro structuré afin de garantir un indice moyen parfaitement contrôlé. Pour cela, on introduit dans le coeur des zones non dopées en verre ou en air. La surface relative de ces zones donne un contrôle quasi parfait de l'indice mais impose des dopages localement très importants pour assurer une absorption du coeur à la longueur d'onde utilisée suffisante pour exciter le milieu amplificateur.

Ces surconcentrations donnent lieu, au cours du temps, à des effets secondaires indésirables.

Dans le document US2005243409, il a été montré, qu'il est possible d'exciter le mode fondamental d'une fibre multimode en ajustant parfaitement les caractéristiques d'un faisceau incident sur la face d'entrée de la fibre.

Cette technique a été utilisée dans un amplificateur en injectant une source extérieure sur la face d'entrée de la fibre multimode. Cette méthode d'injection sélective nécessite un signal externe dont le faisceau est parfaitement gaussien et ne s'applique donc pas à un oscillateur.

Il est aussi connu que toute courbure ou variation de position de la fibre à tendance à coupler une partie du rayonnement de ce mode vers des modes d'ordre élevé, rendant ainsi le rayonnement multimode en sortie de la fibre mais peut aussi coupler tout ou partie du rayonnement multimode vers la gaine, introduisant ainsi des pertes sur ces modes d'ordre supérieur.

Dans le document US 6 496 301, il a ainsi été montré qu'on peut provoquer un filtrage des modes d'ordre supérieur en courbant fortement la fibre optique.

Néanmoins cette méthode entraîne inéluctablement des pertes sur le mode fondamental et elle est difficile à mettre en oeuvre sur des fibres courtes puisqu'elle nécessite un enroulement sur plusieurs tours de diamètre compris entre 5 et 15 cm ce qui correspond à des longueurs de fibre supérieures à 1 m.

Par ailleurs, la présence de plusieurs modes dans le rayonnement issu de la fibre rend difficile voire impossible l'obtention d'un rayonnement polarisé.

Il n'existe pour l'instant pas de solution convenable pour les lasers à fibre permettant d'obtenir un mode unique de grande dimension transverse, sans risque pour la longévité de la fibre. Dans les documents US5818630 et WO2004066458 il est suggéré de filtrer les modes d'ordre supérieur en introduisant des éléments optiques dans la cavité . Dans HONG-SEOK SEO ET AL: "Single mode laser oscillation in an Nd-doped large core double clad fiber cavity with concatenated adiabatic tapers",ETRI Journal Electron. & Telecommun. Res. Inst., Taejon South Korea, vol. 24, no. 3, 1 juin 2002 (2002-06-01), pages 255-258, les modes d'ordre supérieur sont filtrés par un embout de fibre à coeur étroit. L'objectif de la présente invention est donc de proposer un dispositif laser à fibre optique de puissance visant à obtenir un rayonnement monomode stable avec un excellent rendement sur le mode fondamental à partir d'une fibre multimode de diamètre arbitrairement grand, sans risque pour la longévité de la fibre.

A cet effet, l'invention concerne, un dispositif laser à fibre optique de puissance selon la revendication 1. Selon l'invention, le sous module optique 25, 26 est un moyen de filtrage spatial comprenant des moyens optiques 2, 8 ayant une position déterminée dans le sous module optique 25, 26 de façon à rendre apte le sous module optique à reproduire en amplitude et en phase, après un aller retour du faisceau laser dans ce dernier, le mode fondamental de la fibre optique multimode 7 sur la face d'entrée ou de sortie 23, 24 de ladite fibre optique multimode 7, minimisant les pertes du mode fondamental, et de façon à rendre apte le sous module optique à filtrer les autres modes, produisant dans le résonateur optique des pertes supplémentaires sur lesdits autres modes, minimisant le nombre de modes laser se propageant dans le résonateur optique.

Dans différents modes de réalisation possibles, la présente invention concerne également les caractéristiques qui ressortiront au cours de la description qui va suivre et qui devront être considérées isolément ou selon toutes leurs combinaisons techniquement possibles :

- le résonateur optique comprend deux sous modules, disposés chacun à l'une des extrémités de la fibre optique multimode,
- le résonateur optique comprend un seul sous module optique, disposé à l'une des extrémités de la fibre optique multimode, le résonateur optique étant fermé à son autre extrémité par un moyen optique de fermeture,
- le moyen optique de fermeture fermant le résonateur optique consiste en l'une des faces d'entrée ou de sortie de la fibre optique multimode, ladite face d'entrée ou de sortie étant plane et perpendiculaire à l'axe optique de la fibre optique,
- le moyen optique de fermeture fermant le résonateur optique est constitué d'un unique élément optique présentant à la fois des propriétés de convergence et de réflexion pour une onde lumineuse,
- les moyens optiques d'un sous module optique comprennent une ou plusieurs lentilles associées à l'une des extrémités réfléchissantes,
- les moyens optiques d'un sous module optique comprennent la face d'entrée ou de sortie de la fibre optique multimode, ladite face d'entrée ou de sortie ayant une convergence propre participant à la fonction de filtrage,
- les moyens optiques d'un sous module optique comprennent un embout de fibre monomode en contact avec l'une des faces d'entrée et de sortie de la fibre optique multimode, le faisceau laser étant focalisé sur ledit embout de fibre monomode par une lentille,
- le coeur de la fibre optique multimode présente un profil radial de dopage non-uniforme de manière à favoriser le gain du mode fondamental,
- la fibre optique multimode dispose de moyen de filtrages propres lui permettant d'être faiblement multimode,
- la fibre optique multimode est mécaniquement rigidifiée par un moyen de stabilisation,
- le moyen de stabilisation de la fibre optique multimode consiste en une gaine mécanique de gros diamètre entourant ladite fibre optique multimode,

- le moyen de stabilisation de la fibre optique multimode consiste en un support cylindrique creusé d'un sillon sur sa périphérie de façon hélicoïdale, ladite fibre optique multimode étant insérée dans ledit sillon de façon à être bloquée par tension,

- le moyen de stabilisation de la fibre optique multimode consiste en un support linéaire creusé d'un sillon dans lequel la fibre optique multimode est insérée suivant un axe longitudinal, ladite fibre optique multimode étant recouverte d'une deuxième pièce de façon à la bloquer par pression,

- le résonateur optique comprend un déclencheur optique disposé à proximité d'une des extrémités réfléchissantes permettant au résonateur optique de générer des impulsions lasers,

- le dispositif laser à fibre optique de puissance comprend un ou plusieurs moyens optiques polarisants.

L'invention concerne également un système laser à fibre optique de puissance comprenant un dispositif laser à fibre optique de puissance décrit précédemment.

Selon l'invention, le système laser à fibre optique de puissance comprend une fibre optique multimode amplificatrice double gaine, le signal lumineux transmis par l'extrémité partiellement réfléchissante du résonateur optique étant couplé à l'une des faces de la fibre optique multimode amplificatrice de façon à n'exciter uniquement ou quasiment que le mode fondamental de la fibre optique multimode amplificatrice double gaine.

L'invention sera décrite plus en détail en référence aux dessins annexés dans lesquels :

- la figure 1 représente un dispositif laser à fibre optique de puissance

- la figure 2 représente la répartition spatiale des modes propres d'une fibre optique ;

- la figure 3 représente un dispositif laser à fibre optique de puissance comprenant deux sous modules optiques comportant chacun une lentille et un miroir totalement ou partiellement réfléchissant;

- la figure 4 représente les distances approximatives entre les éléments optiques afin de remplir les conditions de filtrage ;

- la figure 5 représente des couples L1-L2 pour lesquels le deuxième sous module 26 résonne pour le mode fondamental, pour différentes valeurs de dimension w ;

- la figure 6 représente un dispositif laser à fibre optique de puissance;

- la figure 7 représente un dispositif laser à fibre optique de puissance comprenant deux embouts de fibre monomode selon un autre mode de réalisation de l'invention ;

- la figure 8 représente un dispositif laser à fibre optique de puissance comprenant un déclencheur;

- la figure 9 représente une coupe transversale d'une fibre optique multimode entourée d'une gaine mécanique ;

- la figure 10 représente un moyen de stabilisation de la fibre optique multimode en forme de cylindre ;

- la figure 11 représente un support linéaire permettant de stabiliser la fibre optique multimode.

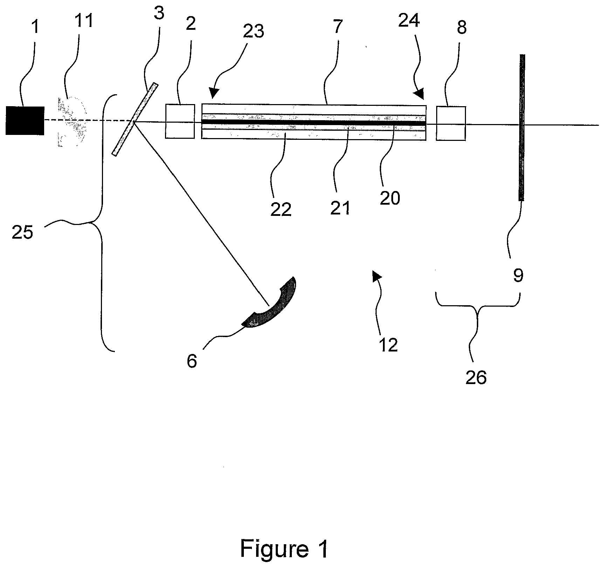

La figure 1 représente un exemple d'un dispositif laser à fibre optique de puissance.

Ce dispositif comprend une diode laser de puissance 1 émettant au moins une onde de pompe. Cette diode laser de puissance 1 peut être éventuellement fibrée.

Le dispositif laser à fibre optique de puissance comprend également un résonateur optique 12, appelé également cavité, comportant une extrémité totalement réfléchissante 6 et une extrémité partiellement réfléchissante 9.

On entend par extrémité totalement réfléchissante 6, une extrémité totalement ou presque totalement réfléchissante.

Les extrémités 6 et 9 peuvent être des miroirs ou des réseaux de diffractions accordés sur la longueur d'onde d'émission laser. L'extrémité partiellement réfléchissante 9 est capable de transmettre une partie du faisceau laser à l'extérieur du résonateur optique 12 et de réfléchir une autre partie du faisceau laser à l'intérieur du résonateur optique 12. Les extrémités 6 et 9 réfléchissent le faisceau à la longueur d'onde d'émission du laser.

Le résonateur optique 12 comprend une fibre optique multimode 7 amplificatrice. Cette fibre optique multimode 7 est une fibre double gaine composé d'un coeur 20 en silice ou en verre dopé par des ions d'une terre rare comme l'ytterbium, le neodynium, le thulium ou l'erbium.

Le diamètre typique de ce coeur 20 est compris entre 20 et 100 microns bien que des diamètres supérieurs soient possibles.

Ce coeur 20 est entouré d'une première gaine 21 dite gaine de pompage, de diamètre compris typiquement entre 100 et 800 microns.

Cette seconde gaine de pompage 21 est entourée d'une gaine de confinement 22 dont l'indice est nettement inférieur à celui de la gaine de pompage 21. La gaine de confinement 22 peut être composée par un ensemble de capillaires remplis d'air, un polymère de bas indice ou tout autre matériau non absorbant.

Cette gaine de confinement 22 peut être entourée d'une gaine mécanique 13 assurant la tenue mécanique de la fibre. La fibre optique multimode 7 peut être intrinsèquement rigide (diamètre > 1 mm) ou souple.

La diode laser de puissance 1 présente une longueur d'onde ajustée pour correspondre à une bande d'absorption des dopants du coeur 20. Elle injecte une onde de pompe dans le coeur 20 de la fibre optique multimode 7.

Des moyens optiques 3, 11 permettent le couplage de l'onde de pompe dans la fibre optique multimode 7 qui produit dans celle-ci un faisceau laser présentant un mode fondamental et pouvant présenter des modes d'ordre supérieur.

Ce rayonnement de pompe crée dans le coeur 20 une population excitée et donc un gain optique.

La longueur de la fibre optique multimode 7 est choisie pour assurer une absorption suffisante de l'onde de pompe et un gain de cavité permettant l'émission laser.

La fibre optique multimode 7 présente une face d'entrée 23 et une face de sortie 24 positionnées à ses extrémités. L'onde de pompe est injectée par la face d'entrée 23 qui se situe à proximité de la diode laser 1. La face de sortie 24 se situe à proximité de l'extrémité partiellement réfléchissante 9.

Le résonateur optique 12 comprend au moins un sous module 25, 26.

Dans un mode de réalisation de l'invention, le résonateur optique 12 comprend deux sous modules optiques 25, 26, comme décrit sur la figure 1.

Il comprend un premier sous module optique 25 formé entre l'extrémité totalement réfléchissante 6 et la face d'entrée 23 de la fibre optique multimode 7 et un deuxième sous module optique 26 formé entre l'extrémité partiellement réfléchissante 9 et la face de sortie 24 de la fibre optique multimode 7.

Une fibre à saut d'indice peut être caractérisée par un paramètre appelé fréquence réduite V donné par :

$$V = \frac{2\pi a}{\lambda} NA$$

avec :

  a : rayon du coeur de la fibre
  λ: longueur d'onde laser
  NA: ouverture numérique du coeur de la fibre

et,

$$NA = \sqrt{n_1^2 - n_2^2}$$

avec

  $\eta_1$: indice du coeur de la fibre
  $n_2$: indice de la gaine de pompe

Le nombre de mode supporté par une fibre multimode est donné par:

$$M = \frac{1}{2} \left( \frac{\pi d}{\lambda} NA \right)^2$$

avec d=2a, d étant le diamètre du coeur de la fibre.

Ceci revient à écrire :

$$M = \frac{V^2}{2}$$

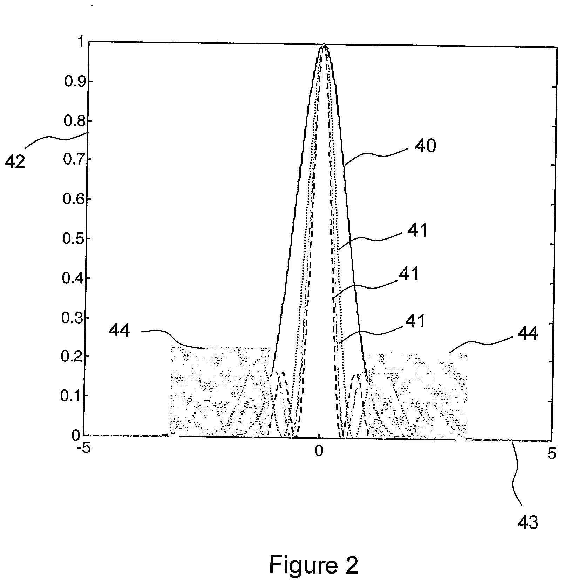

Le nombre de modes susceptibles de se propager dans une fibre croit très rapidement avec le diamètre de coeur de celle-ci. Bien que nombreux, comme le montre la figure 2, ces modes ont des caractéristiques très bien connues et sont parfaitement représentés par des polynômes de Laguerre-Gauss.

La figure 2 représente la répartition spatiale des modes propres d'une fibre optique. L'ordonnée 42 représente le gain et l'abscisse 43 représente la distance par rapport au centre de la fibre.

La forme du faisceau se décompose en modes d'ordre élevé 41 et en mode d'ordre 0 (ou mode fondamental 40).

Le mode d'ordre 0, représenté sur la figure par la courbe 40, présente une forme gaussienne et son intensité décroît radialement suivant la loi suivante :

$$I(r) = \exp\left(-\frac{r^2}{w^2}\right)$$

La dimension w du mode d'ordre 0, appelé mode fondamental, dans la fibre est donnée approximativement par la formule :

$$\frac{w}{a} = 0.650 + 1.619 V^{-3/2} + 2.879 V^{-6}$$

Il est possible, d'après ces expressions, de forcer la fibre optique à guider le mode fondamental. Si l'intensité lumineuse incidente à l'entrée de l'une des faces 23, 24 de la fibre optique correspond à un mode propre de propagation dans cette fibre, l'énergie reste confinée dans ce mode et ne peut exciter de mode d'ordre supérieur.

On retrouve donc en sortie de la fibre optique un profil d'intensité lumineux exactement égal à celui du mode injecté.

La difficulté est donc d'injecter sur l'une des faces 23, 24 de la fibre optique une répartition d'intensité lumineuse exactement égale à celle du mode fondamental.

Seules certaines répartitions en amplitude et phase d'une onde peuvent se propager à travers un sous module optique 25, 26 sans déformation, à condition que les caractéristiques optique et géométrique du sous module optique 25, 26 soient compatibles avec une propagation stable au sens de l'optique gaussienne. On peut ainsi trouver des répartitions très particulières qui se reproduisent avec un minimum de pertes, voire sans perte par diffraction, après un aller-retour dans ledit sous module optique 25, 26. Ces répartitions peuvent être considérés comme des modes propres de propagation du sous module optique 25, 26, le mode fondamental ayant une répartition gaussienne d'intensité. Lorsqu'une répartition lumineuse (en amplitude et phase) correspondant à un mode propre du sous module optique 25, 26 est placée sur la face d'entrée du sous module optique 25, 26, cette répartition se retrouve sans changement ni perte après avoir effectué un aller retour dans le sous module optique 25, 26.

Inversement, une onde dont les caractéristiques ne correspondent pas au mode fondamental du sous module optique 25, 26 va d'une part subir des pertes par diffraction dans le sous module optique 25, 26 et d'autre part voir sa répartition d'amplitude et de phase totalement transformée par le passage à travers le sous module optique 25, 26.

Pour résoudre le problème de filtrage des modes dans une fibre multimode, chaque sous module optique 25, 26 est conçu de façon à ce que son mode fondamental présente sur l'interface, entre le sous module optique 25, 26 et la fibre optique multimode 7, des caractéristiques égales ou quasiment égales à celle du mode fondamental de la fibre multimode 7. Les sous modules optiques 25, 26 permettent ainsi de réimager le mode fondamental issu de l'une des faces d'entrée ou de sortie 23, 24 de la fibre optique multimode 7 sur lui-même, de façon à exciter uniquement ou quasiment que le mode fondamental de la fibre optique multimode. L'imagerie s'entend ici au sens des faisceaux gaussiens et non pas des rayons lumineux, c'est à dire qu'un faisceau ré-imagé sur lui même présente après un aller retour dans un système optique une répartition d'amplitude et de phase identique à celle de l'onde incidente.

Le sous module optique 25, 26 permet d'adapter la dimension w du mode fondamental du faisceau laser incident sur l'une des faces d'entrée ou de sortie 23, 24 de la fibre optique multimode 7 de façon à produire un faisceau laser monomode, ou quasiment, en sortie de l'autre face d'entrée ou de sortie 23, 24 de la fibre optique multimode 7.

Chaque sous module optique 25, 26 est en fait un moyen de filtrage spatial apte à permettre le filtrage spatial de l'énergie du faisceau laser incident sur la face d'entrée ou de sortie 23, 24 de façon à réduire le gain des modes d'ordre élevé en dessous d'un seuil de gain et à amener le gain du mode fondamental au dessus dudit seuil de gain.

Le seuil de gain correspond au seuil qui permet d'obtenir un effet laser.

Les moyens de filtrage que sont les sous modules optiques 25, 26 sont disposés face aux faces d'entrée et de sortie 23, 24 de la fibre optique multimode 7, respectivement.

Les sous modules optiques 25, 26 sont indépendants de la fibre optique multimode 7 amplificatrice. Les sous modules optiques 25, 26 vont privilégier le mode fondamental et par conséquent imposer une émission monomode même si le milieu amplificateur est susceptible de supporter plusieurs modes.

Chaque sous module optique 25, 26 comprend des moyens optiques 2, 8 ayant une position déterminée dans le sous module optique 25, 26 de façon à rendre apte le sous module optique à reproduire en amplitude et en phase, après un aller retour du faisceau laser dans ce dernier, le mode fondamental de la fibre optique multimode 7 sur la face d'entrée ou de sortie 23, 24 de ladite fibre optique multimode 7, minimisant les pertes par diffraction du mode fondamental.

La position des moyens optiques 2, 8 est également déterminée dans le sous module optique 25, 26 de façon à rendre apte le sous module optique à filtrer les autres modes, produisant des pertes par diffraction supplémentaires sur lesdits autres modes, minimisant le nombre de modes laser se propageant dans le résonateur optique.

On recherche préférentiellement à reproduire le mode fondamental de la fibre optique multimode 7 et à minimiser les pertes par diffraction de ce mode.

Même si les sous modules 25, 26 ne filtre pas la totalité des modes non fondamentaux, le nombre de modes du faisceau laser en sortie du résonateur optique 12 est très nettement inférieur au nombre de modes intrinsèques de la fibre optique multimode 7.

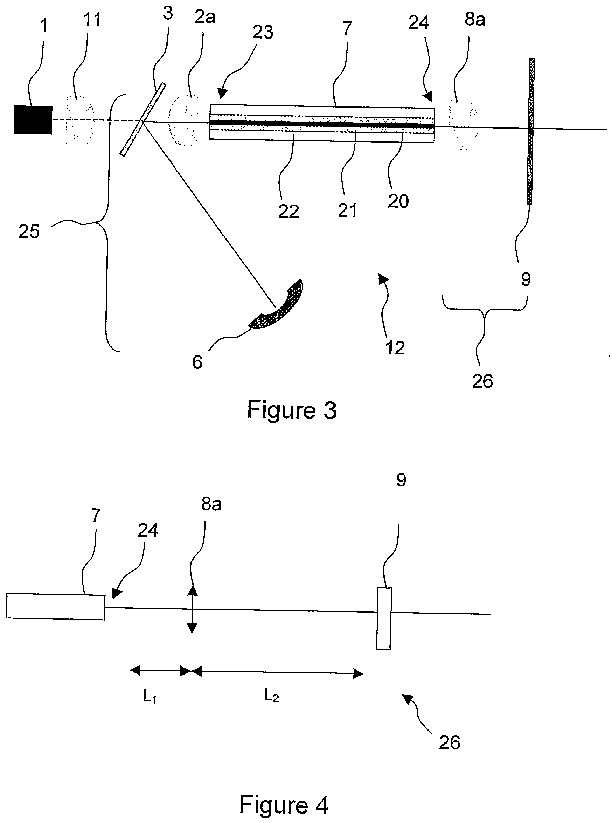

Dans le mode de réalisation, représenté sur la figure 3, le premier sous module optique 25 comprend des moyens optiques 2, 8 consistant en une lentille 2a ou plusieurs lentilles et un miroir 6, positionnés de façon à ce que les caractéristiques du mode fondamental de ce sous module optique 25 correspondent au mode fondamental de la fibre optique multimode 7 sur la face d'entrée 23.

La deuxième sous module optique 26 comprend également des moyens optiques 2, 8 consistant en une lentille 8a ou plusieurs lentilles et un miroir partiellement réfléchissant 9, positionnés de façon à ce que les caractéristiques du mode fondamental de ce sous module optique 26 correspondent au mode fondamental de la fibre optique multimode 7 sur la face de sortie 24.

Les moyens optiques 2, 8 d'un sous module 25, 26 peuvent comprendre la face d'entrée ou de sortie 23, 24 de la fibre optique multimode 7. La face d'entrée ou de sortie 23, 24 peut être elle-même filtrante ou avoir une puissance optique participant au sous module optique 25, 26.

La face d'entrée ou de sortie 23, 24 de la fibre optique multimode 7 est alors travaillée par clivage, fusion, polissage ou autre technique de réalisation optique et qui permet d'obtenir une convergence non nulle.

Le mode de fonctionnement du dispositif laser à fibre optique de puissance est décrit en détail ci-dessous.

La diode laser de puissance 1 génère une onde de pompe qui est injectée dans la fibre optique multimode 7 au travers d'une lentille 11 focalisant l'onde de pompe sur un miroir dichroïque 3. L'onde de pompe est ensuite focalisée sur la face d'entrée 23 de la fibre optique multimode 7 par la lentille 2a des moyens optiques 2 du premier sous module 25. Le rayonnement de la diode laser de puissance 1 est absorbé dans le coeur 20 de la fibre optique multimode 7.

La fibre optique multimode 7 émet alors un second rayonnement à une longueur d'onde λ qui est guidé tout au long de la fibre optique multimode 7 jusqu'à la face de sortie 24 de la fibre optique multimode 7. Ce rayonnement est ensuite collimaté par la lentille 8a des moyens optiques 8 du deuxième sous module 26, avant d'être incident sur le miroir partiellement réfléchissant 9 à la longueur d'onde λ.

Une partie du rayonnement est donc renvoyée dans la fibre optique multimode 7. En sortie de la face d'entrée 23 de la fibre optique multimode 7, le rayonnement est collimaté sur le miroir dichroïque 3, par la lentille 2a des moyens optiques 2, 8 du premier sous module 25.

L'extrémité totalement réfléchissante 6 consistant en un miroir totalement réfléchissant ferme le résonateur optique 12 et renvoi le rayonnement sur lui même vers la fibre optique multimode 7. Ce miroir peut être plan ou présenter une courbure.

Le principe de filtrage du mode résonant dans ce laser à fibre est d'accorder les caractéristiques géométriques des deux sous modules optiques 25,26.

Pour ce faire on ajuste les distances, les focales et les rayons de courbure des différents éléments optiques afin que le col du faisceau gaussien qui peut résonner dans les sous modules optiques 25, 26 corresponde exactement à celui du mode fondamental dans la fibre optique multimode amplificatrice 7.

Le mode propre du premier sous module optique 25 est obtenu, par exemple, avec la méthode des matrices ABCD ("Laser", Siegmann). La face d'entrée 13 de la fibre 7 étant plane, le faisceau gaussien présente forcément un col à cet endroit. Cette méthode permet de calculer la taille du mode propre, c'est à dire se ré-imageant en phase et amplitude après un aller retour dans le premier sous module optique 25 qui présente automatiquement un col à ce même endroit.

Il est à noter que ce calcul fait intervenir des faisceaux gaussiens et n'est donc pas équivalent à un calcul d'optique géométrique. Il n'y a pas ici d'imagerie au sens géométrique du terme mais propagation d'un mode gaussien, c'est à dire d'une répartition d'énergie et d'un front de phase.

La même méthode peut être appliquée pour calculer le mode du deuxième sous module optique 26.

Par cette méthode, il est donc possible d'ajuster les paramètres des deux sous modules optiques 25, 26 de façon à ce que la dimension w du mode de chacun des sous modules optiques 25, 26 corresponde exactement ou quasiment à la dimension du mode fondamental de la fibre optique multimode 7 sur les faces d'entrée 23 et de sortie 24.

Dans ces conditions, il y a résonance entre les modes propres des deux sous modules optiques 25, 26 et de la fibre optique multimode 7. On est alors dans les conditions de pertes par diffraction minimales aussi bien dans la fibre optique multimode 7 que dans les sous modules optiques 25, 26. Le laser ainsi formé va naturellement laser sur ce mode fondamental même si la fibre optique peut supporter d'autres modes.

La figure 4 représente les distances entre les éléments optiques du deuxième sous module optique 26 à prendre en compte pour le calcul.

La distance L1 correspond à la distance entre la face de sortie de la fibre optique multimode 7 et la lentille 8a des moyens optiques 8 du deuxième sous module 26.

La distance L2 correspond à la distance entre la lentille 8a des moyens optiques 8 du deuxième sous module 26 et le miroir partiellement réfléchissant 9.

La méthode ci-dessus permet de calculer les distances L1 et L2 pour que le mode fondamental soit de dimension w sur la face de sortie 24. Dans cet exemple, la distance focale de la lentille 8a des moyens optiques 8 du deuxième sous module 26 est f2=8 mm.

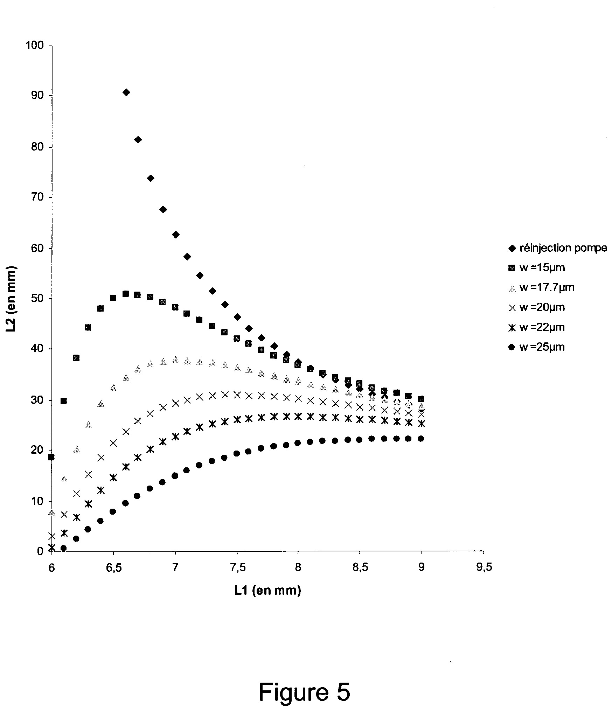

La figure 5 représente des couples L1-L2 pour lesquels le deuxième sous module optique 26 résonne pour le mode fondamental, pour différentes valeurs de dimension w (ou diamètre du mode).

La figure 5 montre que pour chaque valeur de w compris ici entre 15 et 25 microns, il existe un couple L1-L2 pour lequel le deuxième sous module optique 26 est résonant pour ce mode.

Il est possible d'effectuer le même calcul pour le premier sous module optique 25 et accorder ce premier sous module optique 25 au mode fondamental de la fibre.

Dans ce mode de réalisation, la fibre optique multimode 7 est une fibre double gaine dopée par des ions Ytterbium. Ses dimensions sont les suivantes:

Diamètre du coeur : 50 $\mu$m ;
Diamètre de la gaine de pompage: 200 $\mu$m ;
Ouverture numérique du coeur: 0.06 ;

Cette fibre optique multimode 7 présente un mode fondamental d'environ 18 $\mu$m, de rayon à 1/e$^2$.

Lorsque le premier 25 et le deuxième 26 sous module optiques ne sont pas accordés, le dispositif laser selon la figure 3 fournit un rayonnement spatialement multimode.

Lorsque le premier 25 et le deuxième 26 sous modules optiques sont construits de façon à ce que leur mode fondamental corresponde à celui de la fibre optique 7, un faisceau monomode spatial est obtenu en sortie du dispositif laser.

Plusieurs jeux de paramètres permettent d'obtenir le résultat ci-dessus. Il est possible d'adapter les rayons de courbures des miroirs totalement 6 et partiellement 9 réfléchissant, à conditions de faire varier concomitamment les distances entre les éléments optiques du résonateur 12.

Les miroirs totalement 6 et partiellement 9 réfléchissant peuvent être courbes ou plans. Dans un mode de réalisation préféré, le miroir totalement réfléchissant 6 a un rayon de courbure compris entre 100 et 200 mm, la lentille 2a des moyens optiques 2 du premier sous module 25 est asphérique avec une focale de 8 mm, la lentille 8a des moyens optiques 8 du deuxième sous module 26 est asphérique avec une focale de 8 mm et le miroir partiellement réfléchissant 9 est plan.

Le miroir partiellement réfléchissant 9 peut être choisi parmi les éléments suivants :

•   Miroir partiellement réfléchissant avec une réflectivité comprise entre 4% et 50% ;
•   Lame de verre plane ou courbée ;
•   Réseau de diffraction avec une réflectivité comprise entre 4% et 50% ;
•   Réseau de Bragg massif avec une réflectivité comprise entre 4% et 50% ;

Dans un mode de réalisation préféré, le miroir partiellement réfléchissant 9 est positionné de façon à renvoyer précisément le faisceau de pompe issu de la gaine de pompage sur lui-même. Sa position est optimisée par un calcul d'optique géométrique pour que la face de sortie 24 de la fibre soit imagée sur elle même après réflexion sur le miroir partiellement réfléchissant 9 avec un grandissement égal à 1 ou -1 et une ouverture numérique image égale à l'ouverture numérique objet.

Dans un autre mode de réalisation, le résonateur optique 12 comprend une lentille 4 disposée entre le miroir dichroïque 3 et l'extrémité totalement réfléchissante 6.

Les distances entre les éléments optiques sont alors recalculées pour tenir compte de ce cette lentille 4.

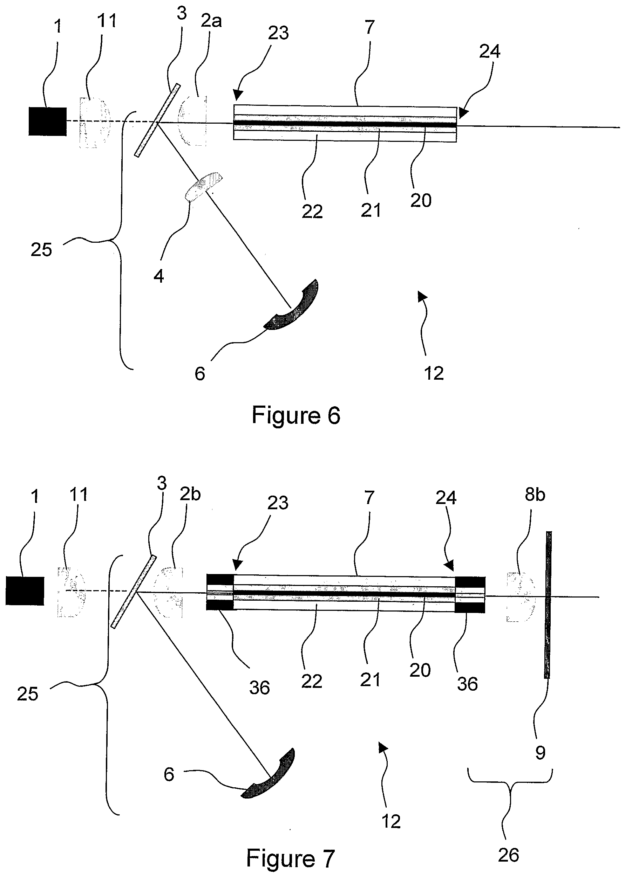

La figure 6 représente un autre exemple dans lequel le résonateur optique 12 comprend seulement le premier sous module optique 25. Ce premier sous module optique 25 comporte des moyens optiques 2 consistant en une lentille 2a et un miroir totalement réfléchissant 6.

Le résonateur optique 12 est fermé à son autre extrémité par un moyen optique de fermeture.

Le moyen optique de fermeture fermant le résonateur optique 12 présente à la fois des propriétés de convergence et de réflexion pour une onde lumineuse.

Il peut être constitué d'un unique élément optique présentant à la fois des propriétés de convergence et de réflexion pour une onde lumineuse.

Le moyen optique de fermeture fermant le résonateur optique 12 peut être la face de sortie 24 de la fibre optique multimode.

La face de sortie 24 de la fibre optique multimode doit avoir une planéité quasi parfaite ainsi qu'une perpendicularité quasi parfaite par rapport à l'axe de cette dernière afin de remplir les conditions de réimagerie du mode fondamental issu du coeur de la fibre sur lui-même. Si l'autre coté du résonateur optique 12 comprend un premier sous module optique 25 ajusté sur le mode propre de la fibre, seul le mode fondamental pourra résonner sans perte.

La face de sortie 24 peut présenter une courbure à condition que la distance entre cette face de sortie et l'entrée de la zone guidante dans la fibre optique 7 et la courbure de cette face soit choisis de façon à remplir les conditions de réimagerie du mode fondamental issu du coeur de la fibre sur lui-même.

Le filtrage spatial utilisé dans le résonateur optique 12 peut aussi utiliser tout système permettant de discriminer des rayonnements de divergences différentes.

Il est également possible d'obtenir un mode de réalisation dans lequel le résonateur optique 12 comprend seulement le deuxième sous module optique 26. Ce deuxième sous module optique 26 comporte un moyen optique 8 consistant en une lentille 8a et un miroir partiellement réfléchissant 9. Le moyen optique de fermeture fermant le résonateur optique 12 est formé par la face d'entrée 23 de la fibre optique multimode 7.

L'extrémité totalement réfléchissante 6 est formée de la face d'entrée 23 de la fibre optique multimode 7.

Selon l'invention représenté sur la figure 7, les moyens optiques 2, 8 des deux sous cavités 25, 26 comprennent chacun un embout de fibre monomode 36 en contact avec l'une des faces d'entrée et de sortie 23, 24 de la fibre optique multimode 7. Le faisceau laser est focalisé sur les embouts de fibre monomode 36 par des lentilles 2b, 8b..

L'embout de fibre monomode 36 a un diamètre de coeur proche de celui de la fibre optique multimode 7.

Le résonateur optique 12 comprend avantageusement deux embouts de fibre monomode 36. Un premier embout de fibre monomode 36 est disposé en contact avec la face d'entrée 23 de la fibre optique multimode 7 et un deuxième embout de fibre monomode 36 est disposé en contact avec la face de sortie 24 de la fibre optique multimode 7. Ces embouts de fibre monomode 36 peuvent être obtenu à partir d'une fibre microstructurée.

On obtient une structure intégrée dans laquelle le filtrage des modes est opéré en associant un ou plusieurs embouts de fibre monomode 36 à une fibre optique amplificatrice multimode 7. Dans ce cas les caractéristiques des fibres optiques multimode 7 et monomode 36 composant les différents tronçons sont calculées pour que leurs modes fondamentaux coïncident et qu'il y ait résonance entre le mode fondamental des embouts de fibre monomode 36 et le mode fondamental de la fibre optique multimode 7. Les embouts de fibre monomode 36 n'étant pas dopés par des ions lasants, ils sont beaucoup plus faciles à réaliser.

Dans un mode de réalisation, le ou les embouts de fibre monomode 36 peuvent être des fibres photoniques monomodes et la fibre optique amplificatrice multimode 7 peut être une fibre dopée (photonique ou non).

Les embouts de fibre monomode 36 sont par exemple soudés sur la fibre optique amplificatrice multimode 7 dopée ou associés à la fibre par fusion, par collage ou par dépôt.

L'embout de fibre monomode 36 contient une structure dite « double clad » comportant d'une part un coeur 20 monomode et d'autre part une gaine de pompe 21 de caractéristique (diamètre et ouverture numérique) équivalente à la fibre optique multimode 7 dopée utilisée comme amplificateur.

Le résonateur optique 12 est fermé par l'extrémité totalement réfléchissante 6 qui peut être un miroir sphérique dont le rayon de courbure et la position sont calculés pour assurer que le mode fondamental issu de l'embout de fibre monomode 36 en contact avec la première extrémité 23 soit imagé sans changement de dimension ou d'ouverture numérique sur la face de cette première extrémité 23 après réflexion sur le miroir sphérique 6.

Le filtrage des modes spatiaux peut être assuré par tout élément dont la transmission ou la réflexion dépend fortement de l'incidence sur cet élément et en particulier un miroir de Bragg massif.

Le filtrage peut être obtenu également par traitement particulier du ou des miroirs du résonateur optique 12.

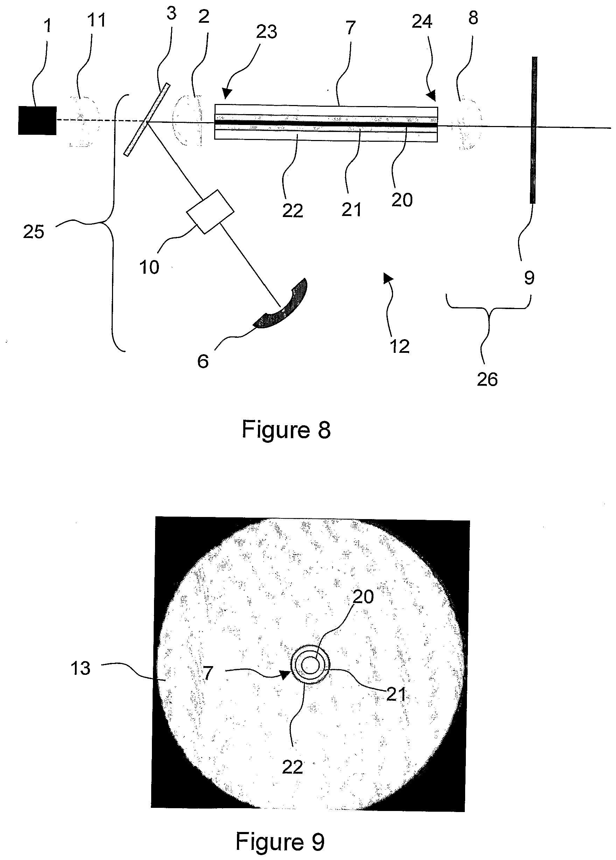

Dans un exemple représenté sur la figure 8, le résonateur optique 12 peut comprendre un déclencheur optique 10 disposé à proximité de l'extrémité totalement réfléchissante 6. Il permet au résonateur optique 12 de générer des impulsions lumineuses géantes à partir d'une source de pompage émettant un rayonnement continu.

Le déclencheur 10 est, de façon préférentielle, disposé entre l'extrémité totalement réfléchissante 6 et le miroir dichroïque 3.

Le déclencheur 10 permet de générer des impulsions nanosecondes.

Afin de garantir un fonctionnement stable, il faut que le reste du résonateur optique 12 ne couple pas une part de l'énergie du mode fondamental sur les autres modes.

Pour cela, la fibre optique multimode 7 est mécaniquement rigidifiée par un moyen de stabilisation stabilisant le rayon de courbure de la fibre optique multimode 7 afin de réduire le couplage du mode fondamental avec les modes d'ordre supérieur.

Selon un mode de réalisation de l'invention, le moyen de stabilisation de la fibre optique multimode 7 comprend une gaine mécanique 13 (de type rod-type rigide) de gros diamètre entourant ladite fibre optique multimode 7 de façon à rigidifier la fibre optique multimode 7. L'utilisation de cette gaine mécanique 13, représentée sur la figure 9, est connue pour une fibre optique monomode.

La figure 9 représente une coupe transversale d'une fibre optique multimode 7 comprenant un coeur 20 entouré d'une gaine de pompe 21, elle-même entourée d'une gaine de confinement 22 qui est entourée d'une gaine mécanique 13 qui peut être en verre.

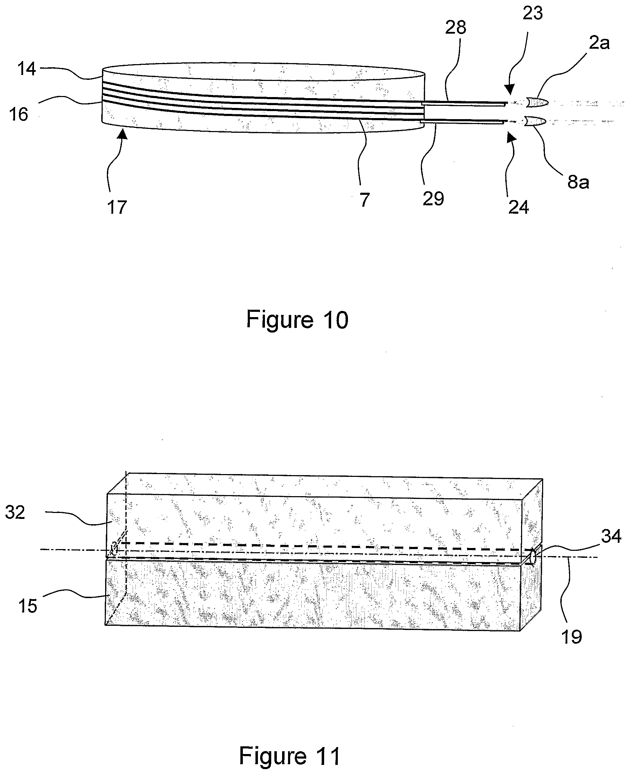

Selon un autre mode de réalisation de l'invention, représenté sur la figure 10, le moyen de stabilisation de la fibre optique multimode 7 comprend un support cylindrique 14 creusé d'un sillon 16 à sa périphérie 17. Le sillon 16 est creusé autour du support cylindrique 14 de façon hélicoïdale. La fibre optique multimode 7 est insérée dans ce sillon 16 de façon à bloquer celle-ci par tension ou par pression.

Le support cylindrique 14 comprend deux supports d'entrée 28 et de sortie 29 par lesquels la fibre optique multimode 7 rentre et ressort du support cylindrique 14. Les lentilles 2a, 8a des moyens optiques 2, 8 des sous modules optiques 25, 26 peuvent être disposées devant ces deux supports d'entrée 28 et de sortie 29 et devant la face d'entrée 23 et la face de sortie 24 de la fibre optique multimode 7. Ces deux supports d'entrée 28 et de sortie 29 comprennent un sillon identique à celui du support cylindrique 14 permettant d'y insérer la fibre optique multimode 7.

Dans ce mode de réalisation, la fibre optique multimode 7 est préférentiellement souple.

Selon un autre mode de réalisation de l'invention, représenté sur la figure 11, le moyen de stabilisation de la fibre optique multimode 7 comprend un support linéaire 15 creusé par un sillon dans lequel la fibre optique multimode 7 est insérée suivant un axe longitudinal 19. Une seconde pièce 33 recouvre la fibre optique multimode 7 de façon à la bloquer par pression.

De manière à favoriser une polarisation rectiligne, il est préférable de rigidifier la fibre en la maintenant dans un plan.

Dans ces deux exemples les sillons sont usinés dans un matériau rigide et si possible bon conducteur de chaleur de façon à minimiser les effets thermiques sur la fibre optique multimode 7. Il est important que l'ensemble de la fibre optique multimode 7 soit en contact avec le support rigide 14, 15.

Dans ces deux exemples, le sillon 16 a des dimensions adaptées à l'insertion de la fibre optique multimode 7.

Dans tous les cas il faut s'assurer que le rayon de courbure de la fibre optique multimode 7 n'introduise pas de couplage entre les modes spatiaux.

Dans ce mode de réalisation, la fibre optique multimode 7 est semi-rigide ou souple et son rayon de courbure peut aller jusqu'à l'infini.

Dans un laser à fibre traditionnel, les micro ou macro courbures de la fibre introduisent des couplages entre les états de polarisation. Il est donc très difficile de maintenir un état de polarisation stable avec une fibre souple, a fortiori si elle est multimode. Le moyen de stabilisation selon l'invention permet de maintenir un état de polarisation stable pour la fibre.

Dans un autre mode de réalisation, il est possible d'introduire dans le résonateur optique 12, un élément déclencheur acousto-optique ou électro-optique, pour permettre d'avoir un gain ou une perte variant en fonction de l'état de polarisation. Il est possible d'obtenir un rayonnement polarisé même si le milieu amplificateur multimode n'est pas à conservation de polarisation. Il permet également d'obtenir un rayonnement continu ou pulsé polarisé.

L'invention concerne également un système laser à fibre optique de puissance comprenant un dispositif laser à fibre optique de puissance, comme décrit précédemment, et une fibre optique multimode amplificatrice double gaine.

Le signal lumineux transmis par l'extrémité partiellement réfléchissante 9 du résonateur optique 12 est couplé à l'une des faces de la fibre optique multimode amplificatrice de façon à adapter la dimension du mode fondamental du faisceau laser transmis avec la dimension de la face de la fibre optique multimode amplificatrice. Un maximum du rayonnement stimulé excité par l'onde de pompe est couplé au mode fondamental.

Comme vu précédemment, dans une fibre optique à saut ou à gradient d'indice, le diamètre à 1/e2 est sensiblement inférieur au diamètre de coeur dopé (36 microns dans une fibre de 50 microns dans le cas présenté). La fibre à saut d'indice dont le coeur est totalement dopé n'est pas la fibre la mieux adaptée au couplage de l'énergie de pompe dans le mode fondamental. Il est donc possible, dans un mode de réalisation particulier, d'optimiser le dispositif laser en utilisant une fibre optique dont le coeur guidant présente un dopage qui n'est pas uniforme transversalement. Ceci présente le double avantage de favoriser le couplage pompe-mode fondamental et donc le rendement laser et de faciliter le filtrage de mode présenté précédemment.

Ce type de couplage est également possible avec une fibre optique présentant un indice variable dans tout ou partie du coeur guidant.

Ainsi, le dispositif laser à fibre optique de puissance permet d'obtenir un rayonnement monomode stable avec un excellent rendement sur le mode fondamental à partir d'une fibre multimode de diamètre arbitrairement grand, sans risque pour la longévité de la fibre.

## Revendications

1. Dispositif laser à fibre optique de puissance comprenant :

   - une diode laser de puissance (1) émettant une onde de pompe,
   - un résonateur optique (12) comportant :

     ◦ une extrémité totalement réfléchissante (6) et une extrémité partiellement réfléchissante (9),
     ◦ une fibre optique multimode (7) amplificatrice entre l'extrémité totalement réfléchissante (6) et l'extrémité partiellement réfléchissante (9), la fibre optique multimode (7) amplificatrice ayant un coeur de diamètre

supérieur à 20 $\mu$m et présentant une face d'entrée (23) et une face de sortie (24) à ses extrémités,

   ◦ un premier sous module optique (25) comprenant une ou plusieurs lentilles (2b), ledit premier sous module optique (25) étant formé entre la face d'entrée (23) de la fibre optique multimode et l'extrémité totalement réfléchissante (6),
   ◦ un second sous module optique (26) comprenant une ou plusieurs lentilles (8b), ledit second sous module optique (26) étant formé entre la face de sortie (24) de la fibre optique multimode et l'extrémité partiellement réfléchissante (9),

   - des moyens optiques de couplage (3, 11, 2) couplant ladite onde de pompe dans la fibre optique multimode (7) de façon à produire un faisceau laser dans le résonateur optique (12), une partie dudit faisceau laser étant transmise à l'extérieur du résonateur optique (12) par l'extrémité partiellement réfléchissante (9) et une autre partie dudit faisceau laser étant réfléchie à l'intérieur du résonateur optique (12),
   - **caractérisé en ce que** :

     lesdites une ou plusieurs lentilles (2b) du premier sous module optique (25) sont configurées pour réimager le mode fondamental issu de la face d'entrée (23) de la fibre optique multimode (7) sur lui-même sur la face d'entrée (23), de façon à que le premier sous module optique (25) reproduise en amplitude et en phase, après un aller retour du faisceau laser dans le premier sous module optique (25), le mode fondamental de la fibre optique multimode (7) sur la face d'entrée (23) de ladite fibre optique multimode (7) ; et

   - dans lequel le premier sous module optique (25) comprend un premier embout de fibre monomode (36) en contact avec la face d'entrée (23) de la fibre optique multimode (7) ; et
   - le second sous module optique (26) comprend un second embout de fibre monomode (36) en contact avec la face de sortie (24) de la fibre optique multimode (7).

2. Dispositif laser à fibre optique de puissance selon la revendication 1, **caractérisé en ce que** le coeur de la fibre optique multimode (7) présente un profil radial de dopage non-uniforme de manière à favoriser le gain du mode fondamental.

3. Dispositif laser à fibre optique de puissance selon l'une quelconque des revendications 1 à 2, **carac-**

**térisé en ce que** la fibre optique multimode (7) est mécaniquement rigidifiée par un moyen de stabilisation.

4. Dispositif laser à fibre optique de puissance selon la revendication 3, **caractérisé en ce que** le moyen de stabilisation de la fibre optique multimode (7) consiste en une gaine mécanique (13) de gros diamètre entourant ladite fibre optique multimode (7).

5. Dispositif laser à fibre optique de puissance selon la revendication 3, **caractérisé en ce que** le moyen de stabilisation de la fibre optique multimode (7) consiste en un support cylindrique (14) creusé d'un sillon (16) sur sa périphérie (17) de façon hélicoïdale, ladite fibre optique multimode (7) étant insérée dans ledit sillon (16) de façon à être bloquée par tension.

6. Dispositif laser à fibre optique de puissance selon la revendication 3, **caractérisé en ce que** le moyen de stabilisation de la fibre optique multimode (7) consiste en un support linéaire (15) creusé d'un sillon (34) dans lequel la fibre optique multimode (7) est insérée suivant un axe longitudinal (19), ladite fibre optique multimode (7) étant recouverte d'une deuxième pièce (33) de façon à la bloquer par pression.

7. Dispositif laser à fibre optique de puissance selon l'une quelconque des revendications 1 à 6, **caractérisé en ce que** le résonateur optique (12) comprend un déclencheur optique (10) disposé à proximité d'une des extrémités réfléchissantes (6, 9) permettant au résonateur optique (12) de générer des impulsions lasers.

8. Dispositif laser à fibre optique de puissance selon l'une quelconque des revendications 1 à 6, **caractérisé en ce qu'**il comprend un ou plusieurs moyens optiques polarisants.

9. Système laser à fibre optique de puissance, **caractérisé en ce qu'**il comprend un dispositif laser à fibre optique de puissance tel que défini selon les revendications 1 à 8 et une fibre optique multimode amplificatrice double gaine, le signal lumineux transmis par l'extrémité partiellement réfléchissante (9) du résonateur optique (12) étant couplé à l'une des faces de la fibre optique multimode amplificatrice de façon à exciter le mode fondamental de la fibre optique multimode amplificatrice double gaine.

**Patentansprüche**

1. Glasfaserleistungslasergerät mit

- einer eine Pumpwelle aussendenden Leistungslaserdiode (1),
- einem optischen Resonator (12), der

= ein vollständig reflektierendes Ende (6) und ein teilweise reflektierendes Ende (9),
= eine zwischen dem vollständig reflektierenden Ende (6) und dem teilweise reflektierenden Ende (9) verstärkende multimodale Glasfaser (7), wobei die verstärkende multimodale Glasfaser (7) einen Kern mit einem Durchmesser von mehr als 20 $\mu$m hat und an deren Enden eine Eingangsfläche (23) und eine Ausgangsfläche (24) aufweist,
= ein erstes optisches Untermodul (25), das eine oder mehrere Linsen (2b) aufweist, wobei das erste optische Untermodul (25) zwischen der Eingangsfläche (23) der multimodalen Glasfaser und dem teilweise reflektierenden Ende (9) gebildet ist,
= ein zweites optisches Untermodul (26), das eine oder mehrere Linsen (8b) aufweist, wobei das zweite optische Untermodul (26) zwischen der Ausgangsfläche (24) der multimodalen Glasfaser und dem teilweise reflektierenden Ende (9) gebildet ist,

aufweist,
- optischen Kopplungsmitteln (3, 11, 2), die die Pumpwelle in die multimodale Glasfaser (7) einkoppeln, um im optischen Resonator (12) einen Laserstrahls zu erzeugten, wobei ein Teil des Laserstrahls über das teilweise reflektierende Ende (9) nach außerhalb des optischen Resonators (12) übertragen wird und ein anderer Teil des Laserstrahls im Inneren des optischen Resonators (12) reflektiert wird,
dadurch gekennzeichnet, daß
- die eine oder mehreren Linsen (2b) des ersten optischen Untermoduls (25) dazu ausgelegt sind, den von der Eingangsfläche (23) der multimodalen Glasfaser (7) kommenden Grundmodus auf sich selbst auf der Eingangsfläche (23) abzubilden, so daß das erste optische Untermodul (25) den Grundmodus der multimodalen Glasfaser (7) nach einem Hin- und Rücklauf des Laserstrahls im ersten optischen Untermodul (25) hinsichtlich Amplitude und Phase auf der Eingangsfläche (23) der multimodalen Glasfaser (7) wiedergibt, und wobei
- das erste optische Untermodul (25) eine mit der Eingangsfläche (23) der multimodalen Glasfaser (7) in Kontakt stehende erste monomodale Faserendhülse (36) aufweist und
- das zweite optische Untermodul (26) eine mit der Ausgangsfläche (24) der multimodalen Glasfaser (7) in Kontakt stehende zweite monomodale Faserendhülse (36) aufweist.

**2.** Glasfaserleistungslasergerät gemäß Anspruch 1, **dadurch gekennzeichnet, daß** der Kern der multimodalen Glasfaser (7) ein ungleichmäßiges radiales Dotierungsprofil aufweist, um die Verstärkung des Grundmodus zu fördern.

**3.** Glasfaserleistungslasergerät gemäß einem der Ansprüche 1 bis 2, **dadurch gekennzeichnet, daß** die multimodale Glasfaser (7) durch ein Stabilisierungsmittel mechanisch versteift ist.

**4.** Glasfaserleistungslasergerät gemäß Anspruch 3, **dadurch gekennzeichnet, daß** das Stabilisierungsmittel der multimodalen Glasfaser (7) aus einer mechanischen Hülle (13) großen Durchmessers besteht, die die multimodale Glasfaser (7) umgibt.

**5.** Glasfaserleistungslasergerät gemäß Anspruch 3, **dadurch gekennzeichnet, daß** das Stabilisierungsmittel der multimodalen Glasfaser (7) aus einem zylindrischen Träger (14) besteht, in dessen Umfang (17) eine Rille (16) spiralförmig eingebracht ist, wobei die multimodale Glasfaser (7) in die Rille (16) eingefügt ist, um durch Spannung blockiert zu sein.

**6.** Glasfaserleistungslasergerät gemäß Anspruch 3, **dadurch gekennzeichnet, daß** das Stabilisierungsmittel der multimodalen Glasfaser (7) aus einem linearen Träger (15) besteht, in den eine Rille (34) eingebracht ist, in die die multimodale Glasfaser (7) entlang einer Längsachse (19) eingefügt ist, wobei die multimodale Glasfaser (7) mit einem zweiten Teil (33) abgedeckt ist, um sie durch Druck zu blockieren.

**7.** Glasfaserleistungslasergerät gemäß einem der Ansprüche 1 bis 6, **dadurch gekennzeichnet, daß** der optische Resonator (12) einen an einem der reflektierenden Enden (6, 9) angeordneten optischen Auslöser (10) aufweist, der dem optischen Resonator (12) ermöglicht, Laserimpulse zu erzeugen.

**8.** Glasfaserleistungslasergerät gemäß einem der Ansprüche 1 bis 6, **dadurch gekennzeichnet, daß** es ein oder mehrere polarisierende optische Mittel aufweist.

**9.** Glasfaserleistungslasersystem, **dadurch gekennzeichnet, daß** es ein Glasfaserleistungslasergerät gemäß einem der Ansprüche 1 bis 8 und eine verstärkende multimodale Glasfaser mit doppelter Hülle aufweist, wobei das vom teilweise reflektierenden Ende (9) des optischen Resonators (12) übertragene Lichtsignal in eine der Flächen der verstärkenden multimodalen Glasfaser eingekoppelt wird, um den Grundmodus der verstärkenden multimodalen Glasfaser mit doppelter Hülle anzuregen.

## Claims

**1.** A fiber optic power laser device comprising:

   - a power laser diode (1) emitting a pump wave,
   - an optical resonator (12) comprising:

      ◦ a fully reflective end (6) and a partially reflective end (9),
      ◦ an amplifying multimode optical fiber (7) between the fully reflective end (6) and the partially reflective end (9), the amplifying multimode optical fiber (7) having a core with a diameter greater than 20 μm, and presenting an input face (23) and an output face (24) at the ends thereof,
      ◦ a first optical submodule (25) comprising one or several lenses (2b), said first optical submodule (25) being formed between the input face (23) of the multimode optical fiber and the fully reflective end (6),
      ◦ a second optical submodule (26) comprising one or several lenses (8b), said second optical submodule (26) being formed between the output face (24) of the multimode optical fiber and the partially reflective end (9),

   - optical coupling means (3, 11, 2) that couple said pump wave in the multimode optical fiber (7) so as to produce a laser beam in the optical resonator (12), a part of said laser beam being transmitted outside the optical resonator (12) through the partially reflective end (9) and another part of said laser beam being reflected inside the optical resonator (12),

   **characterized in that**:

   - said one or several lenses (2b) of the first optical submodule (25) are configured to reimage the fundamental mode issuing from the input face (23) of the multimode optical fiber (7) on itself on the input face (23), so that the first optical submodule (25) reproduces, after a round trip of the laser beam in the first optical submodule (25), the amplitude and phase of the fundamental mode onto the input face (23) of said multimode optical fibre (7); and
   - wherein the first optical submodule (25) comprises a first single-mode fiber tip (36) in contact with the input face (23) of the multimode optical fiber (7); and
   - and the second optical submodule (26) comprises a second single-mode fiber tip (36) in contact with the output face (24) of the multimode optical fiber (7).

**2.** The fiber optic power laser device according to claim 1, **characterized in that** the core of the multimode optical fiber (7) has a non-uniform radial doping profile so as to favour the gain of the fundamental mode.

**3.** The fiber optic power laser device according to any one of claims 1 to 2, **characterized in that** the multimode optical fiber (7) is mechanically stiffened by a stabilizing means.

**4.** The fiber optic power laser device according to claim 3, **characterized in that** the stabilizing means of the multimode optical fiber (7) consists of a large-diameter mechanical sheath (13) surrounding said multimode optical fiber (7).

**5.** The fiber optic power laser device according to claim 3, **characterized in that** the stabilizing means of the multimode optical fiber (7) consists of a cylindrical support (14), in the periphery (17) of which is hollowed-out a groove (16), in an helical manner, said multimode optical fiber (7) being inserted in said groove (16) so as to be tension-locked.

**6.** The fiber optic power laser device according to claim 3, **characterized in that** the stabilizing means of the multimode optical fiber (7) consists of a linear support (15) having a hollowed-out groove (34) in which the multimode optical fiber (7) is inserted along a longitudinal axis (19), said multimode optical fiber (7) being covered with a second piece (33) so as to be pressure-locked.

**7.** The fiber optic power laser device according to any one of claims 1 to 6, **characterized in that** the optical resonator (12) comprises an optical trigger (10) arranged close to one of the reflective ends (6, 9), enabling the optical resonator (12) to generate laser pulses.

**8.** The fiber optic power laser device according to any one of claims 1 to 6, **characterized in that** it comprises one or more polarizing optical means.

**9.** A fiber optic power laser system, **characterized in that** it comprises a fiber optic power laser device as defined according to claims 1 to 8, and a double-sheath amplifying multimode optical fiber, the light signal transmitted by the partially reflective end (9) of the optical resonator (12) being coupled to one of the faces of the amplifying multimode optical fiber, so as to excite the fundamental mode of the double-sheath amplifying multimode optical fiber.

Figure 1

Figure 2

Figure 3

Figure 4

Figure 5

Figure 6

Figure 7

Figure 8

Figure 9

Figure 10

Figure 11

EP 2 041 848 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2005243409 A
- US 6496301 B
- US 5818630 A
- WO 2004066458 A

**Littérature non-brevet citée dans la description**

- **J. LIMPERT ; N. DEGUIL-ROBIN ; I. MANEK-HÖNNINGER ; F. SALIN ; F. RÖSER ; A. LIEM ; T. SCHREIBER ; S. NOLTE ; H. ZELLMER ; A. TÜNNERMANN.** High-power rod-type photonic crystal fiber laser. *Opt. Express,* 2005, vol. 13, 1055-1058

- **HONG-SEOK SEO et al.** Single mode laser oscillation in an Nd-doped large core double clad fiber cavity with concatenated adiabatic tapers. *ETRI Journal Electron. & Telecommun. Res. Inst.,* 01 Juin 2002, vol. 24 (3), 255-258